# EUROPÄISCHE PATENTSCHRIFT

(11) **EP 4 450 893 B1**
(45) Veröffentlichungstag und Bekanntmachung des Hinweises auf die Patenterteilung: **04.03.2026**
(21) Anmeldenummer: 24170825.4
(22) Anmeldetag: 17.04.2024
(51) Int. Cl.: F24H 9/14, F24H 9/20, F24H 9/28, F24H 15/223, F24H 15/246, F24H 15/281, A47J 31/44

(54) **MODULEINHEIT**
MODULE UNIT
UNITÉ MODULAIRE

(30) Priorität: 17.04.2023 CH 3952023
(43) Veröffentlichungstag der Anmeldung: 23.10.2024
(73) Patentinhaber: BRF Holding AG, 5524 Nesselnbach (CH)
(72) Erfinder: Burri, Reto, 5524 Nesselnbach (CH)
(74) Vertreter: BOVARD AG

(56) Entgegenhaltungen:
- EP-A1- 3 974 316
- WO-A1-2017/001367
- WO-A1-2019/030719

## Beschreibung

### Technisches Gebiet der Erfindung

Die vorliegende Erfindung bezieht sich auf eine Moduleinheit, insbesondere auf eine Moduleinheit in Kombination mit einem Getränkeautomaten. Die Moduleinheit kann in einen mobilen Transportwagen integriert werden, um beispielsweise im Krankenhaus, Pflegeinrichtungen, in der Eventgastronomie oder Ähnlichem, eine Getränkeausgabe für Heissgetränke oder einen anderen Service an Orten bereitzustellen, an denen keine Stromversorgung und/oder kein Wasseranschluss möglich ist.

### Stand der Technik

Die Versorgung von Patienten auf einer Station im Krankenhaus oder einer Pflege- oder Senioreneinrichtung oder von Gästen in der Eventgastronomie mit einem Heissgetränk wie Kaffee, Tee oder Schokolade sowie eventuell Suppe erfolgt weitgehend an einer stationären und zentralen Ausgabe. Dies kann beispielsweise ein Heissgetränkeautomat oder auch eine grössere Vorrats- bzw. Isolierkanne sein. Sowohl für die Patienten als auch für das Personal ist dies aufwändig und im Falle der grossen Isolierkannen ist auch die Qualität des Heissgetränks unbefriedigend. Ferner stellen solche stationären Versorgungspunkte insbesondere im Krankenhaus in hygienischer Hinsicht ein Problem da.

Bekannt sind mobile Kaffeestationen, welche eine Kaffeemaschine mit einem Fahrwagen kombinieren, in dem ein Behälter für Frischwasser und ein Behälter für Abwasser vorgesehen sind. Allerdings benötigt dieses von einem Wasseranschluss unabhängiges System weiterhin einen Stromanschluss, so dass die Einsatzmöglichkeiten begrenzt sind.

Beispielsweise zeigt EP3974316A1 eine stationäre Vorrichtung zur Bereitstellung von erhitztem oder gekühltem Wasser in Flugzeugen, wobei das Wasser aus dieser stationären Vorrichtung entnehmbar und mittels eines mobilen Trolleys im Flugzeug verteilbar ist.

WO2017001367A1 zeigt ferner einen mobilen Tank mit zwei integrierten Heizelementen, welcher mobile Tank mit weiteren Komponenten, wie beispielsweise einer Brühvorrichtung, zu einer mobilen Getränkezubereitungsvorrichtung kombinierbar ist.

### Zusammenfassung der Erfindung

Es ist Aufgabe der Erfindung eine Moduleinheit im Rahmen eines Verteilersystems zur Verpflegung in Grosspflegebetrieben oder Ähnlichem vorzusehen, um in hygienischer und bakteriologisch einwandfreier Weise sowie mit hoher Qualität eine Versorgung des Patienten mit Getränken etc. zu ermöglichen. Demnach soll die Moduleinheit zumindest Wasser und Energie für externe Geräte unterschiedlichen Typs wie Getränkeautomaten oder andere Geräte bereitstellen. Die Moduleinheit, insbesondere in Kombination mit einem mobilen Transportwagen, soll demnach die örtliche und zeitliche Distanz von der Ausgabe bis zum Patienten sowohl für das Pflegepersonal als auch für den Patienten überbrücken und insbesondere verkürzen. Die Moduleinheit soll einfach zu warten sein, insbesondere ausbaubare und austauschbare Komponenten umfassen, welche je nach Bedürfnis auswählbar sind.

Die Aufgaben werden gelöst durch eine Moduleinheit mit den Merkmalen des Anspruchs 1. Weitere vorteilhafte Ausführungsformen gehen ausserdem aus den abhängigen Ansprüchen hervor.

Insbesondere werden die Ziele der vorliegenden Erfindung durch eine Moduleinheit erreicht, welche eine Vielzahl von Modulkomponenten wie ein Gehäuse, einen Boiler zum Bevorraten und Erwärmen eines definierten Wasservolumens auf eine bestimmbare Temperatur, umfassend einen Wassertank und eine Heizeinrichtung, sowie einen Wasseranschluss) für eine externe Wasserquelle und mindestens einen Auslass, eine Pumpe mit einem Leitungssystem, mittels welchem das in dem Boiler erwärmte Wasser zu einem Fluidanschluss für ein externes Gerät förderbar ist. Ferner umfasst die Moduleinheit eine Energieeinheit mit einem Wechselrichter mit einem netzüblichen Wechselstromabgang für mindestens ein externes Gerät und einen wiederaufladbaren Energiespeicher. Der wiederaufladbare Energiespeicher kann ausserhalb des Gehäuses angeordnet sein. Darüber hinaus umfasst die Moduleinheit Sensormittel zum Erfassen von Daten über Temperatur und/oder Wasserstand in dem Boiler und/oder einem Ladezustand des mindestens einen wiederaufladbaren Energiespeichers und Steuermittel mit einem Ein- und Ausgabefeld zum Steuern der Modulkomponenten, basierend auf den erfassten, eingebbaren und/oder gespeicherten Daten.

Die Moduleinheit stellt eine kompakte Einheit dar, welche somit an unterschiedlichen Orten aufstellbar bzw. aufnehmbar ist. Das Gehäuse kann aus einem leichtgewichtigen Material wie Aluminium gefertigt sein, um das Gewicht für eine verbesserte Mobilität zu reduzieren. Insbesondere kann an einer Frontplatte des Gehäuses Bedien- und Anzeigemittel angeordnet sein, welche für einen Benutzer einfach zugänglich und intuitiv verständlich sind. Zwischen dem Teil der Moduleinheit, welcher den Boiler, die Pumpe und Wasseranschlüsse umfasst und demjenigen Teil der Moduleinheit, in dem elektrische Komponenten wie Wechselrichter und Steuerung untergebracht sind, kann eine Trennplatte vorgesehen sein.

Auf einer Frontplatte des Gehäuses kann neben einem Ein- und Ausgabefeld, beispielsweise ein Touch-Screen für eine Steuerung, auch ein Not-Aus-Schalter, ein Einschalter und ein Ausschalter vorgesehen sein, wobei mittels Signallicht der Betriebszustand der Moduleinheit anzeigbar ist.

Der Boiler der Moduleinheit kann ein handelsüblicher Boiler mit einem Wassertank und einem Heizelement sein. Vorzugsweise hat der Wassertank ein Fassungsvermögen, um für eine Anzahl von bis zu 80 Getränkeportionen von jeweils etwa 125 ml Portionen ausreichend Wasser zu bevorraten. Wird die Moduleinheit zur Kaffee- und/oder Teezubereitung eingesetzt, d.h. ist das externe Gerät ein Kaffee- und/oder Teeautomat, heizt das Heizelement das Wasser in dem Boiler auf eine geeignete Temperatur, beispielsweise auf eine Temperatur zwischen 60°C und 80°C, vorzugsweise zwischen 65°C und 70°C. Diese Temperatur ist erforderlich, um das bevorratete Wasser im Boiler frei von Bakterien und/oder Keimen zu halten. Hierfür kann auch vorgesehen sein, dass zumindest kurzfristig die Temperatur im Boiler darüber hinaus erhöht werden kann.

Es ist vorgesehen, dass der Wassertank des Boilers mittels Anschluss an eine externe Wasserquelle füllbar ist, vorzugsweise automatisch füllbar. Der Aufheizvorgang erfolgt vorzugsweise, wenn die Moduleinheit an einer externen Energiequelle angeschlossen ist. Dies ist vorteilhaft, um die von der Energieeinheit der Moduleinheit bereitgestellte Energie tatsächlich für die Zubereitung von Heissgetränken oder Ähnlichem zu nutzen, wenn die Moduleinheit nicht mit einer externen Energiequelle verbunden ist. Vorzugsweise kann die Moduleinheit über etwa 12 Stunden unabhängig von einer externen Energiequelle genutzt werden.

Um die Moduleinheit einfach zur Versorgung eines externen Geräts mit Energie und Wasser einsetzen zu können, sind an dem Gehäuse hierfür leicht zugängliche Anschlüsse vorgesehen. Beispielsweise kann an einer oberen Fläche der Moduleinheit ein Fluidanschluss vorgesehen sein, welcher als Plug-in Anschluss eine dichtende fluidleitende Kontaktierung des externen Geräts zu dem im Boiler bevorrateten temperierten Wassers ermöglicht. Um ein oder mehrere externe Geräte unterschiedlichen Typs anschliessen zu können, können mehrere elektrische Anschlüsse unterschiedlichen Typs vorgesehen sein, d.h. kompatibel mit unterschiedlichen Steckerformen. Insbesondere sind Strom- und Wasseranschluss für das externe Gerät leicht zugänglich und in räumlicher Nähe zueinander anordenbar.

Daten über den Wasserstand und die Temperatur in dem erwärmten bevorrateten Wasser können mittels der Sensormittel erfasst werden. Hierfür können die Sensormittel mindestens einen Temperatursensor und einen Füllstandsensor umfassen, welche beispielweise in den Boiler einschraubbar sind. Diese erfassten Daten, übermittelt an die Steuermittel, können genutzt werden, um sowohl die Pumpe einzuschalten bzw. dann auszuschalten, wenn der Wasserstand unter einem Niveau gefallen ist und/oder wenn die Temperatur einen bestimmten Wert unterschreitet. Das Heizelement kann von den Steuermitteln ein- und ausgeschaltet werden.

Ferner ist eines der Sensormittel ausgebildet, um den Ladezustand des wiederaufladbaren Energiespeichers zu detektieren. Diese und die weiteren Daten können an dem Ein- und Ausgabefeld, beispielsweise ein Touch-Display, gut sichtbar für einen Benutzer angezeigt werden. Ferner können weitere Signaleinrichtungen vorgesehen sein, um über den Zustand der Moduleinheit und/oder die Notwendigkeit bestimmter Handlungen in geeigneter Weise zu informieren.

Die Energieeinheit der Moduleinheit umfasst mindestens einen wiederaufladbaren Energiespeicher, vorzugsweise einen Lithium-Ionen Akkumulator, beispielsweise einen Lithium-Eisenphosphat Akkumulator (LiFePO₄), mit einer Nennspannung im Bereich von 24 V und einer Kapazität im Bereich von mindestens 100 Ah.

Ein in der Moduleinheit verwendbarer Lithium-Ionen Akkumulator, insbesondere ein Lithium-Eisenphosphat Akkumulator, kann Silicium oder Silicium-Kohlenstoff, bzw. Eisenphosphat-Komposite als Anodenmaterial enthalten, wobei eine sehr hohe Energiedichte erzielbar ist. Derartige Lithium-Eisenphosphat Akkumulatoren haben eine lange Lebensdauer, sind wartungsfrei, sicher, insbesondere unempfindlich gegen Temperaturwechsel, nicht brennbar, leicht an Gewicht und zeigen eine verbesserte Entlade- und Ladeeffizient.

Die Energieeinheit umfasst einen Wechselrichter, der vorzugsweise im Gehäuse der Moduleinheit aufnehmbar ist, um den von dem wiederaufladbaren Energiespeicher entnehmbare Gleichstrom in einen für ein anschliessbares externes Gerät geeigneten netzüblichen Wechselstrom umzuwandeln. Dies sorgt für einen störungsfreien Betrieb des angeschlossenen externen Geräts, insbesondere auch für ein solches welches wie eine Kaffeemaschine eine aufwendige Funktionsausstattung hat. Die Moduleinheit kann demnach einen leistungsstarken Wechselrichter mit hohen Leistungsreserven umfassen, vorzugsweise einen der eine Dauerleistung über einen langen Zeitraum von 2,5 kW bei 230 V zur Verfügung stellt und auf die Abgabespannung des wiederaufladbaren Energiespeichers abgestimmt ist. Demnach sind an dem Wechselrichter diverse elektrische Eingangs- und Ausgangsanschlüsse vorgesehen.

Der Wechselrichter kann auch eingerichtet sein, um im Falle, dass die Moduleinheit an eine externe Energiequelle angeschlossen ist, die wiederaufladbare Energiespeicher automatisch aufzuladen.

Die Moduleinheit umfasst Steuermittel, um alle für den Betrieb des externen Geräts erforderlichen Modulkomponenten gemäss einer Software zu steuern, insbesondere zu aktivieren und darüber hinaus solche, welche die Energieversorgung steuern, beispielsweise in Form einer Relaissteuerung für die Wechselspannung. Die Steuermittel können von den Sensormitteln erfasste Daten empfangen und verarbeiten, um dann die Modulkomponenten zu aktivieren oder desaktivieren. Hierfür können die Steuermittel einen Prozessor sowie Speichermittel umfassen. Darüber hinaus umfassen die Steuermittel ein Ein- und Ausgabefeld, um Daten zur Steuerung einzugeben und/oder erfasste, eingebbare und/oder in einem Speichermittel gespeicherte Daten in geeigneter Form anzuzeigen. Vorzugsweise ist das Ein- und Ausgabefeld als Touch-Screen ausgebildet.

Beispielsweise zeigt eine der an dem Ein- und Ausgabefeld angezeigten Daten an, wenn ein Wasserwechsel des im Wassertank des Boilers bevorrateten Wassers erforderlich ist. Längere Standzeiten des bevorrateten Wassers sollten vermieden werden, um ein hohes Niveau an Hygiene aufrechtzuerhalten. Bei Anzeige eines Wasserwechsels kann über das Ein- und Ausgabefeld die Steuermittel veranlasst werden, die Pumpe zu aktivieren und das Leitungssystem das Wasser über einen Auslass abzulassen.

**In** einer bevorzugten Ausführungsform kann die Moduleinheit einen Transportwagen umfassen, in welchen diese aufnehmbar ist. Der Transportwagen kann mittels daran vorgesehener Rollen und entsprechender Griffe einfach und mit kleinem Kraftaufwand manövriert werden. Alternativ kann der Transportwagen einen Antrieb umfassen, so dass dieser ohne Kraftaufwand gesteuert manövrierbar ist.

Insbesondere wird die Moduleinheit für ein externes Gerät genutzt, welches für seinen Betrieb Energie und Wasser benötigt. Das externe Gerät kann demnach eine Kaffeemaschine oder allgemein ein Heissgetränkeautomat sein, welches mit der Moduleinheit fluidleitend und elektrisch verbindbar ist. Hierfür können Plug-in Anschlüsse vorgesehen sein, welche mittels Einstecken miteinander in einen dichtenden Verbindungseingriff gebracht werden können.

Weitere Einzelheiten der Erfindung gehen aus der nun folgenden Beschreibung der bevorzugten Ausführungsformen der erfindungsgemässen Moduleinheit hervor, welche in den beigefügten Zeichnungen beispielhaft dargestellt sind. Aus der Beschreibung lassen sich weitere Vorteile der vorliegenden Erfindung entnehmen, sowie Anregungen und Vorschläge, wie der Erfindungsgegenstand im Rahmen des Beanspruchten abgeändert oder auch weiterentwickelt werden kann.

### Kurzbeschreibung der Zeichnungen

Es zeigen:
Figur 1 eine schematische Frontansicht der Moduleinheit;
Figur 2 eine schematische Innenansicht der Moduleinheit; und
Figur 3 eine schematische Aufsicht auf die Moduleinheit.

### Bevorzugte Ausführungsformen der Erfindung

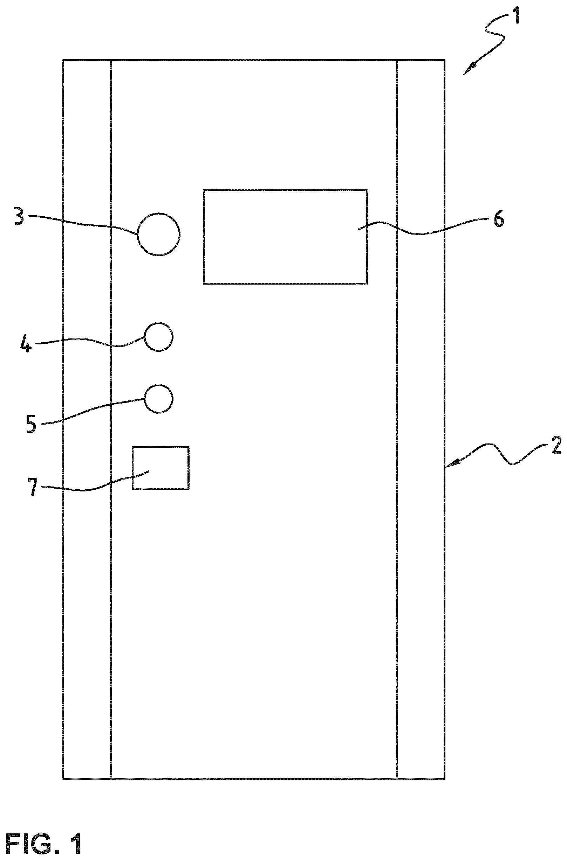

Die Figur 1 zeigt eine Frontansicht der Moduleinheit 1. In einem Gehäuse 2 sind Modulkomponenten der Moduleinheit 1 untergebracht. An einer Frontplatte des Gehäuses 2 sind für einen Benutzer gut zugänglich und intuitiv verständliche Bedieneinrichtungen vorgesehen. So gibt es einen Not-Aus-Schalter 3, einen Einschalter 4 und einen Ausschalter 5. Insbesondere der Einschalter 4 und/oder der Ausschalter 5 können jeweils mit einem Signallicht gekoppelt sein, das den Schaltzustand von Einschalter 4 und/oder Ausschalter 5 auch optisch anzeigt. Unterhalb des Ausschalters 5 ist noch ein Fehlerstrom-Schutzschalter 7 für die Absicherung von 230 V vorgesehen.

Ferner ist auf der Frontplatte des Gehäuses 2 ein Ein- und Ausgabefeld 6 vorgesehen, welches als Touch-Screen ausgebildet ist. An dem Bildschirm können Daten der Moduleinheit 1 angezeigt werden, beispielsweise Informationen über den Wasserstand in dem integrierten Boiler, die Temperatur des bevorrateten Wassers, ein erforderlicher Wasserwechsel und/oder den Ladezustand des internen Energiespeichers sowie Information zur technischen Unterstützung. Andere Informationen sind jedoch ohne weiteres denkbar.

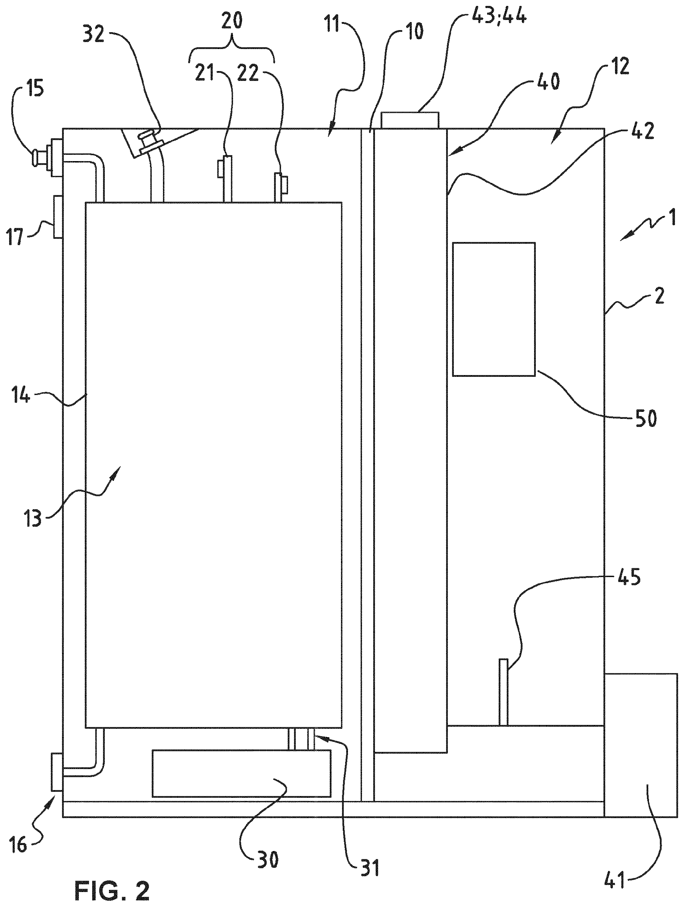

Figur 2 zeigt eine schematische Innenansicht der Moduleinheit 1, d.h. eine seitliche Ansicht mit entfernter Seitenwand des Gehäuses 2. Der Innenraum des Gehäuses 2 ist in dieser Ausführungsform von einer Trennplatte 10 in einen ersten Teil 11 und einen zweiten Teil 12 unterteilt. In dem ersten Teil 11 des Gehäuses 2 sind die Wasser führenden bzw. enthaltenen Modulkomponenten untergebracht. So ist ein Boiler 13 mit einem zugeordneten Wassertank 14 als Einheit und einem darin angeordneten Heizelement (nicht gezeigt) vorgesehen. Ferner verfügt der Boiler 13 über einen Wasseranschluss 15 zum Anschliessen an eine externe Wasserquelle und über einen Auslass 16, um bevorratetes Wasser automatisch abzulassen. Der Boiler 13 ist an eine externe Energiequelle anschliessbar, beispielsweise während eines Aufheizvorgangs, und verfügt demnach über einen entsprechenden Stromanschluss 17.

Ferner sind Sensormittel 20 vorgesehen und in Figur 2 schematisch oberhalb des Boilers 13 dargestellt, um Daten über den Wasserstand in dem Wassertank 14 mittels eines Füllstandsensors 21 und über die Temperatur des bevorrateten Wassers mittels eines Temperatursensors 22 zu erfassen. Vorzugsweise sind der Füllstandsensor 21 und der Temperatursensor 22 seitlich und/oder unterhalb des Boilers 13 angeordnet.

In einem unteren Bereich des ersten Teils 11 ist eine Pumpe 30 vorgesehen, welche mittels eines Leitungssystems 31 eine fluidleitende Verbindung für das in dem Wassertank 14 bevorratete und erwärmte Wasser mit einem an einer Oberseite der Moduleinheit 1 vorgesehenen Fluidanschluss 32 bereitstellt. Dieser kann in einen dichtenden fluidleitenden Eingriff mit einem externen Gerät, beispielsweise durch Einstecken, gebracht werden.

In dem zweiten Teil 12 der Moduleinheit 1 sind elektrische Modulkomponenten untergebracht. Dies sind eine Energieeinheit 40 mit einem Wechselrichter 42, sowie Steuermittel 50. Ein ebenfalls von der Energieeinheit 40 umfasster wiederaufladbarer Energiespeicher 41 ist in dem dargestellten Ausführungsbeispiel ausserhalb des Gehäuses 2 angeordnet und ist über entsprechende elektrische Leitungen (nicht dargestellt) mit dem Wechselrichter 42 verbindbar. Vorzugsweise ist der wiederaufladbare Energiespeicher 41 ein Lithium-Eisenphosphat Akkumulator.

Die Steuermittel 50 umfassen eine Hauptsteuerung, um mittels einer geeigneten Software die Komponenten der Moduleinheit zu steuern und eine Relaissteuerung für die Wechselspannung.

Ferner umfassen die Sensormittel 20 einen Sensor 45, um den Ladezustand der Energieeinheit 40 zu erfassen. Dieser ist an die Steuermittel 50 übermittelbar sowie an dem Ein- und Ausgabefeld 6 darstellbar. Vorzugsweise ist der Sensor 45 in einer elektrischen Leitung zwischen Wechselrichter 42 und Energiespeicher 41 vorgesehen.

Nicht im Detail in Figur 2 dargestellt ist, dass der Wechselrichter 42 mittels eines elektrischen Stromanschlusses 43 mit einer externen Energiequelle verbindbar ist, insbesondere um den Energiespeicher 41 wieder zu laden.

An der Oberseite der Moduleinheit 1 und von aussen zugänglich sind für eine elektrische Kontaktierung mindestens eines externen Geräts mindestens der elektrische Anschluss 33 vorgesehen. Vorzugsweise können mehrere elektrische Anschlüsse 33 für mehrere externe Geräte vorgesehen sein. Der oder die elektrischen Anschlüsse 33 können kompatibel für unterschiedliche Steckerformen ausgebildet sein. Die an dem oder den elektrischen Anschüssen 33 bereitgestellte Stromversorgung erlaubt einen Anschluss eines oder mehrerer mit netzüblichen Wechselstrom betriebener externer Geräte.

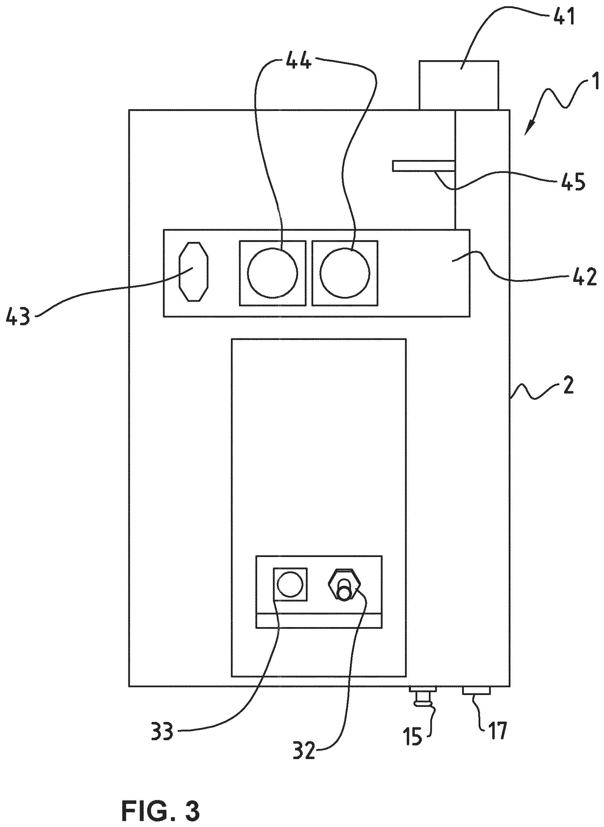

In Figur 3 ist schematisch eine Aufsicht auf die Moduleinheit 1, d.h. auf eine Oberseite des Gehäuses 2 gezeigt. Wie vorhergehend beschrieben, ist die Moduleinheit 1 geeignet, um für ein externes Gerät den Fluidanschluss 32 als auch mindestens den elektrischen Anschluss 33 zur Verfügung zu stellen. Der Fluidanschluss 32 und/oder der elektrische Anschluss 33 können in einer entsprechend ausgebildeten Vertiefung vorgesehen sein, so dass das externe Gerät standsicher auf der Oberseite des Gehäuses aufgestellt werden kann, ohne dass die fluidleitenden und elektrisch leitenden Anschlüsse dabei hinderlich sind. Darüber hinaus ist der Wasseranschluss 15 vorgesehen, um den Boiler 13, bzw. den Wassertank 14, mit Frischwasser zu versorgen und der Stromanschluss 17, um den Boiler 13 mit einer externen Energiequelle über den Wechselrichter 42 zu versorgen.

Ferner ist getrennt von dem Fluidanschluss 32 und dem elektrischen Anschluss 33 für das externe Gerät, z.B. eine Kaffeemaschine, weitere elektrische Anschlüsse vorgesehen. Wie in Figur 3 dargestellt, ist eine der weiteren Anschlüsse, d.h. der Stromanschluss 43, als Steckdose für die elektrische Kontaktierung des Wechselrichters 42 mit einer externen Energiequelle vorgesehen. Weitere Stromausgänge 44 sind vorgesehen, um das oder die externen Geräte, einschliesslich des wiederaufladbaren Energiespeichers 41, mit dem über den Wechselrichter 42 bereitgestellte Energie entsprechend den Anforderungen zu versorgen. Insbesondere wird Gleichstrom bei 24 V in dem wiederaufladbaren Energiespeicher 41 gespeichert und mittels des Wechselrichters 42 in Wechselstrom von 230 V an dessen Ausgang 44 für das externe Gerät bereitgestellt.

## Patentansprüche

1. Moduleinheit (1), umfassend als Modulkomponenten:
- ein Gehäuse (2),
- einen Boiler (13) zum Bevorraten und Erwärmen eines definierten Wasservolumens auf eine bestimmbare Temperatur, umfassend einen Wassertank (14) und eine Heizeinrichtung, sowie einen Wasseranschluss (15) für eine externe Wasserquelle und mindestens einen Auslass (16),
- eine Pumpe (30) mit einem Leitungssystem (31), mittels welchem das in dem Boiler (13) erwärmte Wasser zu einem Fluidanschluss (32) für ein externes Gerät förderbar ist,
- eine Energieeinheit (40), umfassend mindestens einen wiederaufladbaren Energiespeicher (41),
- Sensormittel (20) zum Erfassen von Daten über Temperatur und/oder Wasserstand in dem Boiler (13) und/oder einem Ladezustand der Energieeinheit (40), und
- Steuermittel (50) mit einem Ein- und Ausgabefeld (6) zum Steuern der Modulkomponenten, basierend auf den erfassten, eingebbaren und/oder gespeicherten Daten,
welche Moduleinheit **dadurch gekennzeichnet ist, dass** die Energieeinheit (40) einen Wechselrichter mit einem netzüblichen Wechselstromabgang für das mindestens eine externe Gerät umfasst.

2. Moduleinheit (1) nach Anspruch 1, **dadurch gekennzeichnet, dass** ferner ein Transportwagen umfasst ist, an welchem die Moduleinheit (1) aufnehmbar ist.

3. Moduleinheit (1) nach Anspruch 1 oder 2, **dadurch gekennzeichnet, dass** in dem Wassertank (14) des Boilers (13) ein Wasservolumen von mehr als 10 l bei einer Temperatur von 60°C bis 80°C, vorzugsweise von 65°C bis 70°C, bevorratbar ist.

4. Moduleinheit (1) nach einem der vorhergehenden Ansprüche, **dadurch gekennzeichnet, dass** der wiederaufladbare Energiespeicher (41) über den Wechselrichter (42) und einen Stromanschluss (43) an eine externe Energiequelle zum Aufladen anschliessbar ist.

5. Moduleinheit (1) nach einem der vorhergehenden Ansprüche, **dadurch gekennzeichnet, dass** der Boiler (13) mittels des Wasseranschlusses (15) an eine externe Wasserquelle zum Befüllen und an eine weitere externe Energiequelle während eines Aufheizvorgangs über einen elektrischen Anschluss (17) anschliessbar ist.

6. Moduleinheit (1) nach einem der vorhergehenden Ansprüche, **dadurch gekennzeichnet, dass** der wiederaufladbare Energiespeicher (41) ein Lithium-Eisenphosphat Akkumulator mit einer Nennspannung von 24 V und einer Kapazität von etwa 100 Ah ist.

7. Moduleinheit (1) nach einem der vorhergehenden Ansprüche, **dadurch gekennzeichnet, dass** das Ein- und Ausgabefeld (6) ein Touch-Screen ist.

8. Moduleinheit (1) nach einem der vorhergehenden Ansprüche, **dadurch gekennzeichnet, dass** der Ladezustand des wiederaufladbaren Energiespeichers (41), der Wasserstand und/oder die Temperatur im Wassertank (14) und/oder ein Signal zum Wechseln des im Wassertank (14) bevorrateten Wasservolumens an dem Ein- und Ausgabefeld (6) angezeigt wird.

9. Moduleinheit (1) nach einem der vorhergehenden Ansprüche, **dadurch gekennzeichnet, dass** ein Not-Aus-Schalter (3), ein Einschalter (4) und ein Ausschalter (5) vorgesehen sind, wobei mittels Signallicht ein Schaltzustand anzeigbar ist.

10. Moduleinheit (1) nach einem der vorhergehenden Ansprüche, **dadurch gekennzeichnet, dass** das mit der Moduleinheit (1) fluidleitend und elektrisch verbindbare externe Gerät ein Heissgetränkezubereiter, bevorzugt eine Kaffeemaschine ist.

11. Verwendung einer Moduleinheit (1) nach einem der vorhergehenden Ansprüche 1 bis 10, **dadurch gekennzeichnet, dass** die Moduleinheit (1) ein daran anschliessbares externes Gerät mit Strom und/oder Wasser versorgt, bevorzugt eine Kaffeemaschine.

12. Verwendung einer Moduleinheit nach Anspruch 11, **dadurch gekennzeichnet, dass** zusätzlich weitere externe Geräte anschliessbar sind, welche von der Moduleinheit (1) mit Strom und/oder Wasser versorgt werden.

## Claims

1. Module unit (1), comprising as module components:
- a housing (2),
- a boiler (13) for storing and heating a defined volume of water to a determinable temperature, comprising a water tank (14) and a heating device, as well as a water connection (15) for an external water source and at least one outlet (16),
- a pump (30) with a pipe system (31) by means of which the water heated in the boiler (13) is able to be conveyed to a fluid connection (32) for an external device,
- an energy unit (40), comprising at least one rechargeable energy storage device (41),
- sensor means (20) for capturing data on temperature and/or water level in the boiler (13) and/or a charge state of the energy unit (40), and
- control means (50) with an input and output field (6) for controlling the module components based on the recorded, inputable and/or stored data,
which module unit is **characterized in that** the energy unit (40) comprises an inverter with a standard AC output for the at least one external device.

2. Module unit (1) according to claim 1, **characterized in that** further comprised is a transport trolley on which the module unit (1) is able to be mounted.

3. Module unit (1) according to claim 1 or 2, **characterized in that** a water volume of more than 10 litres at a temperature of 60°C to 80°C, preferably 65°C to 70°C, is able to be stored in the water tank (14) of the boiler (13).

4. Module unit (1) according to one of the preceding claims, **characterized in that** the rechargeable energy storage device (41) is able to be connected to an external energy source for charging via the inverter (42) and a power connection (43).

5. Module unit (1) according to one of the preceding claims, **characterized in that** the boiler (13) is able to be connected to an external water source for filling via the water connection (15) and to a further external energy source during a heating process via an electrical connection (17).

6. Module unit (1) according to one of the preceding claims, **characterized in that** the rechargeable energy storage device (41) is a lithium iron phosphate accumulator with a nominal voltage of 24 V and a capacity of approximately 100 Ah.

7. Module unit (1) according to one of the preceding claims, **characterized in that** the input and output field (6) is a touch screen.

8. Module unit (1) according to one of the preceding claims, **characterized in that** the charge status of the rechargeable energy storage device (41), the water level and/or the temperature in the water tank (14) and/or a signal for changing the volume of water stored in the water tank (14) is displayed on the input and output field (6).

9. Module unit (1) according to one of the preceding claims, **characterized in that** an emergency stop switch (3), a switch-on button (4) and a switch-off button (5) are provided, whereby a switching status is able to be indicated by means of a signal light.

10. Module unit (1) according to one of the preceding claims, **characterized in that** the external device that is able to be connected to the module unit (1) in a fluid-conducting and electrical manner is a hot beverage maker, preferably a coffee machine.

11. Use of a module unit (1) according to one of the preceding claims 1 to 10, **characterized in that** the module unit (1) supplies an external device that is connectable thereto with electrical power and/or water, preferably a coffee machine.

12. Use of a module unit according to claim 11, **characterized in that** additional external devices are able to be connected, which are supplied with electrical power and/or water by the module unit (1).

## Revendications

1. Module (1), comprenant comme composants de module :
- un boîtier (2)
- une chaudière (13) pour stocker et chauffer un volume défini d'eau à une température déterminable, comprenant un réservoir d'eau (14) et un dispositif de chauffage, ainsi qu'un raccordement d'eau (15) pour une source d'eau externe et au moins une sortie (16),
- une pompe (30) avec un système de conduits (31) grâce auquel l'eau chauffée dans la chaudière (13) peut être acheminée vers un raccord de fluide (32) pour un appareil externe,
- une unité d'énergie (40), comprenant au moins un dispositif de stockage d'énergie rechargeable (41),
- des moyens de détection (20) pour capturer des données sur la température et/ou le niveau d'eau dans la chaudière (13) et/ou l'état de charge de l'unité d'énergie (40), et
- moyen de commande (50) avec un champ d'entrée et de sortie (6) pour commander les composants du module sur la base des données enregistrées, saisissables et/ou stockées,
le module étant **caractérisé en ce que** l'unité d'énergie (40) comprend un onduleur avec une sortie de courant alternatif standard pour au moins un dispositif externe.

2. Module (1) selon la revendication 1, **caractérisé en ce qu'**il comprend en outre un chariot de transport sur lequel le module (1) peut être monté.

3. Module (1) selon la revendication 1 ou 2, **caractérisé en ce qu'**un volume d'eau supérieur à 10 litres à une température comprise entre 60 °C et 80 °C, de préférence entre 65 °C et 70 °C, peut être stocké dans le réservoir d'eau (14) de la chaudière (13).

4. Module (1) selon l'une des revendications précédentes, **caractérisé en ce que** le dispositif de stockage d'énergie rechargeable (41) peut être connecté à une source d'énergie externe pour être chargé via l'onduleur (42) et une connexion électrique (43).

5. Module (1) selon l'une des revendications précédentes, **caractérisé en ce que** la chaudière (13) peut être raccordée à une source d'eau externe pour le remplissage via le raccordement d'eau (15) et à une autre source d'énergie externe 10 pendant un processus de chauffage via un raccordement électrique (17).

6. Module (1) selon l'une des revendications précédentes, **caractérisé en ce que** le dispositif de stockage d'énergie rechargeable (41) est un accumulateur au lithium fer phosphate avec une tension nominale de 24 V et une capacité d'environ 100 Ah.

7. Module (1) selon l'une des revendications précédentes, **caractérisé en ce que** le champ d'entrée et de sortie (6) est un écran tactile.

8. Module (1) selon l'une des revendications précédentes, **caractérisé en ce que** l'état de charge du dispositif de stockage d'énergie rechargeable (41), le niveau d'eau et/ou la température dans le réservoir d'eau (14) et/ou un signal pour modifier le volume d'eau stocké dans le réservoir d'eau (14) est affiché sur le champ d'entrée et de sortie (6).

9. Module (1) selon l'une des revendications précédentes, **caractérisé en ce qu'**un interrupteur d'arrêt d'urgence (3), un bouton d'activation (4) et un bouton de désactivation (5) sont fournis, l'état de commutation pouvant être indiqué au moyen d'un voyant lumineux.

10. Module (1) selon l'une des revendications précédentes, **caractérisé en ce que** le dispositif externe pouvant être connecté au module (1) de manière à conduire les fluides et l'électricité est une machine à boissons chaudes, de préférence une machine à café.

11. Utilisation d'un module (1) selon l'une des revendications 1 à 10 précédentes, **caractérisée en ce que** le module (1) alimente en électricité et/ou en eau un appareil externe pouvant y être connecté, de préférence une machine à café.

12. Utilisation d'une unité modulaire selon la revendication 11, **caractérisée en ce que** des dispositifs externes supplémentaires peuvent être connectés, qui sont alimentés en électricité et/ou en eau par le module (1).
